# EUROPÄISCHE PATENTSCHRIFT

(11) **EP 4 517 535 B1**
(45) Veröffentlichungstag und Bekanntmachung des Hinweises auf die Patenterteilung: **03.06.2026**
(21) Anmeldenummer: 25152452.6
(22) Anmeldetag: 26.08.2011
(51) Int. Cl.: G06F 11/30, G05B 15/02, G06F 8/65

(54) **PARALLELE PROGRAMMIERUNG UND AKTUALISIERUNG VON BELEUCHTUNGSTECHNIK-BUSTEILNEHMERN**
PARALLEL PROGRAMMING AND UPDATING OF LIGHTING BUS SUBSCRIBERS
PROGRAMMATION PARALLÈLE ET MISE À JOUR D'ABONNÉS DE BUS DE TECHNIQUE D'ÉCLAIRAGE

(30) Priorität: 30.08.2010 DE 102010039921; 27.10.2010 DE 102010043011
(43) Veröffentlichungstag der Anmeldung: 05.03.2025
(62) Teilanmeldung aus: 11749816.2
(73) Patentinhaber: Tridonic GmbH & Co. KG, 6851 Dornbirn (AT)
(72) Erfinder: Sohm, Stefan, 6851 Dornbirn (AT)
(74) Vertreter: Rupp, Christian

(56) Entgegenhaltungen:
- EP-B1- 0 801 836

## Beschreibung

### Einleitung

Die vorliegende Erfindung betrifft ein Verfahren zur Programmierung bzw. Aktualisierung von Softwareständen, insbesondere von Firmware, von Beleuchtungstechnik-Busteilnehmern mit Update-Software.

Unter Beleuchtungstechnik-Busteilnehmern sind z.B. über einen Bus, insbesondere über einen Zweidrahtbus, verbundene Geräte zu verstehen, wie z. B. Sensoren, Aktoren wie insbesondere Betriebsgeräte für Leuchtmittel und Benutzerschnittstellen. Natürlich können auch andere Beleuchtungstechnik-Busteilnehmer aktualisiert werden, die zumindest teilweise mit einer Software betrieben und/oder angesteuert werden.

### Hintergrund der Erfindung

Zur Beseitigung von Fehlern in der Firmware eines Beleuchtungstechnik-Busteilnehmers oder zur Bereitstellung neuer/anderer Merkmale an dem Beleuchtungstechnik-Busteilnehmer kann es gewünscht sein, die Firmware, also die Software mit der der Beleuchtungstechnik-Busteilnehmer betrieben und/oder gesteuert wird, durch einen neuen bzw. anderen Firmware-Softwarestand zu ersetzen (Software-Update mit Update-Software). Das beschriebene Verfahren ist jedoch nicht auf ein Aktualisieren/Updaten einer Firmware beschränkt sondern kann auch für ein Aktualisieren/Updaten anderer Software-Komponenten des Beleuchtungstechnik-Busteilnehmers verwendet werden.

Aus der WO 2006/066884 A1 ist dabei ein Verfahren zur Programmierung eines einzelnen Betriebsgeräts für Leuchtmittel bekannt, bei dem über eine Schnittstelle die Firmware eines Betriebsgerätes für Leuchtmittel aktualisiert bzw. geändert wird.

Ferner zeigt die EP 0 801 836 B1 ein Energiemanagement- und Gebäudeautomationssystem, das ein lokales Netz oder einen Hausautomationsdatenbus umfasst. Jede Last ist über ein Steuermodul an den Bus angeschlossen, das einen Leistungsschalter enthalten kann, um die Last auf Befehl oder bei einem Stromausfall vom Netz zu trennen. Stromüberwachungs-Steuermodule messen den Laststrom und Leistungsüberwachungsmodule überwachen die von ausgewählten Lasten verbrauchte Leistung, wobei beide Module Busnachrichten übertragen, die den Laststatus und Statusänderungen anzeigen. Ein erster Mikrocomputer befindet sich vorzugsweise außerhalb des Kundengeländes, in der Nähe des Stromzählers des Energieversorgers. Ein zweiter Mikrocomputer befindet sich vorzugsweise innerhalb des Kundengebäudes. Die beiden Mikrocomputer kommunizieren untereinander und mit den verschiedenen Modulen über den Netzwerk-/Datenbus. Der erste Mikrocomputer kommuniziert über eine beliebige Kommunikationsverbindung mit dem Energieversorgungsunternehmen. Der zweite Mikrocomputer dient zum Teil als Eingabe-/Ausgabe-Terminal für das System, das dem Kunden die Einstellung von Parametern und die Abfrage des Stromverbrauchs ermöglicht und vom Kunden angeforderte Berichte sowie vom Versorgungsunternehmen und von einem der beiden Mikrocomputer übermittelte Nachrichten anzeigt. Der erste Mikrocomputer fungiert als Master-Controller und/oder Netzwerkserver, der mit der Außenwelt kommuniziert, als Kommunikationsgateway zwischen Sprach-, Video- und Datendiensten und als primärer Datensammler und Betreiber von Lastkontrollmodulen; der zweite Mikrocomputer bietet bestimmte Backup-Funktionen. Das Versorgungsunternehmen kann über Nachrichten an den ersten Mikrocomputer auf ausgewählte Nutzungsdaten zugreifen und zumindest einige Lasten steuern. Die vorliegende Erfindung bezieht sich der erstgenannten Druckschrift gegenüber insbesondere auf das parallele Aktualisieren einer Vielzahl von Beleuchtungstechnik-Busteilnehmern.

Dazu werden an einem Bus verfügbare Beleuchtungstechnik-Busteilnehmer ermittelt, z.B. durch eine verbundene Zentraleinheit, und anschließend eine Auswahl von Beleuchtungstechnik-Busteilnehmern getroffen, die aktualisiert werden sollen. Dabei können die zur Verfügung stehenden Beleuchtungstechnik-Busteilnehmer nach verschiedenen Kriterien für ein Update zusammengefasst werden. Beispielsweise werden Beleuchtungstechnik-Busteilnehmer gleicher Art in Klassen eingeteilt. Die Erfindung erlaubt es dann, Softwareupdates für eine Vielzahl unterschiedlicher Beleuchtungstechnik-Busteilnehmer bereitzustellen, z.B. für alle Beleuchtungstechnik-Busteilnehmer verschiedener Klassen, in effizienter Weise zu übermitteln und auf die jeweiligen Beleuchtungstechnik-Busteilnehmer aufzuspielen.

Die Beleuchtungstechnik-Busteilnehmer sind dabei mit einer oder mehreren Zentraleinheiten verbunden, über die der Updatevorgang gesteuert wird. Insbesondere können über die Zentraleinheit einzelne oder mehrere Beleuchtungstechnik-Busteilnehmer, eine oder mehrere Beleuchtungstechnik-Busteilnehmerklassen oder auch alle angeschlossenen Beleuchtungstechnik-Busteilnehmer für ein Update ausgewählt werden. Die Zentraleinheit kann eine Update-Software, d.h. ein Computerprogrammprodukt, mit dem Beleuchtungstechnik-Busteilnehmer betrieben werden können, bereitstellen und dieses Softwareupdate an die ausgewählten Beleuchtungstechnik-Busteilnehmer übermitteln.

Das Übermitteln der Update-Software, wie es nachfolgend genauer beschrieben wird, kann dabei von einem Benutzer gesteuert werden, um beispielsweise festzulegen, wann eine Update-Software auf einen ausgewählten Beleuchtungstechnik-Busteilnehmer aufzuspielen ist. So kann beispielsweise festgelegt werden, dass bestimmte Beleuchtungstechnik-Busteilnehmer nachts oder innerhalb bestimmter Zeiträume mit der Update-Software zu versorgen sind. Die Zentraleinheit kann dabei z. B. auch eine Voraussage darüber treffen, wie viel Zeit das Aufspielen einer Update-Software auf die ausgewählten Beleuchtungstechnik-Busteilnehmer in Anspruch nimmt. Liegt die ermittelte Zeit z. B. außerhalb eines zur Verfügung stehenden Zeitfensters, so kann die Zentraleinheit das Aufspielen der Update-Software auf mehrere Zeitfenster aufteilen oder einem Benutzer eine solche Aufteilung vorschlagen.

In einem ersten Schritt können dabei durch die Zentraleinheit Beleuchtungstechnik-Busteilnehmer identifiziert und gelistet werden. Danach wird die Update-Software, z.B. blockweise, über den Bus auf die zuvor, anhand einer durch die Zentraleinheit für ein Softwareupdate vergebenen Update-Identifikation (Update-ID), ausgewählten Beleuchtungstechnik-Busteilnehmer aufgespielt.

Bei einer blockweisen Übermittlung der Update-Software wird nach der Übermittlung eines Blocks ermittelt, welche Busteilnehmer den Block korrekt empfangen haben. Falls es bei einem oder mehreren Beleuchtungstechnik-Busteilnehmern zu einer Störung bei der Übermittlung der Update-Software kommt, werden in einem folgenden Schritt nur noch die mangelhaft oder die nicht empfangenen Blöcke erneut übermittelt.

Während das Softwareupdate auf die ausgewählten Beleuchtungstechnik-Busteilnehmer übermittelt wird, können die Beleuchtungstechnik-Busteilnehmer, die nicht aktualisiert werden, weiter regulär betrieben werden und durch über den Bus übermittelte Steuerbefehle gesteuert werden.

Jeder ausgewählte Beleuchtungstechnik-Busteilnehmer ist durch eine eindeutige ID identifizierbar. Die eindeutige ID kann von dem Beleuchtungstechnik-Busteilnehmer ausgelesen werden. Ein Erkennungsdienst, ein sog. Poll-Manager, der beispielsweise auf der Zentraleinheit ausgeführt wird, identifiziert alle an dem Bus angeschlossenen Geräte, sodass eine Liste aller angeschlossenen Geräte für einen Benutzer aufgestellt werden kann. Der Benutzer bestimmt dann Aufgaben, sog. Tasks, durch die bestimmt wird, welche Beleuchtungstechnik-Busteilnehmer mit einem Softwareupdate versorgt werden.

Dabei können wie bereits erwähnt Beleuchtungstechnik-Busteilnehmer ausgewählt werden. Gleichartige Beleuchtungstechnik-Busteilnehmer, d.h. Beleuchtungstechnik-Busteilnehmer, die z.B. eine ähnliche Hardware aufweisen und deshalb mit der gleichen Update-Software aktualisiert werden können, können dabei mit einer einzigen Update-Identifikation versehen werden und/oder in Beleuchtungstechnik-Busteilnehmerklassen zusammengefasst werden. Beleuchtungstechnik-Busteilnehmer einer Klasse werden dann mit einer Update-Software versorgt, während andere Beleuchtungstechnik-Busteilnehmer/Beleuchtungstechnik-Busteilnehmerklassen mit anderen Softwareupdates versorgt werden können.

Die Beleuchtungstechnik-Busteilnehmer können auch nach ihrem Ort/ihrer Lage in einem Gebäude ausgewählt werden. Somit ist es z. B. möglich, alle Beleuchtungs-Aktoren (Betriebsgeräte für Leuchtmittel) auf einem Stockwerk mit einer Update-Software zu versehen, während Beleuchtungs-Aktoren an anderer Stelle nicht aktualisiert werden. Eine Auswahl nach anderen Kriterien ist ebenfalls möglich. So können beispielsweise auch Beleuchtungstechnik-Busteilnehmer in verschiedenen Räumen (z. B. nicht vermietete Zimmer eines Hotels) für ein Software-Update ausgewählt werden.

Der Benutzer kann je Task eine Konfiguration für das Softwareupdate bereitstellen. Eine solche Konfiguration kann in der Angabe zusätzlicher Parameter für das Softwareupdate bestehen. Zudem kann angegeben werden, auf welche Softwareversion die ausgewählten Beleuchtungstechnik-Busteilnehmer, auch abhängig vom bereits vorliegenden Softwarestand, aktualisiert werden sollen.

Nach Erstellen des Tasks versendet z.B. ein auf der Zentraleinheit ausgeführtes Steuerprogramm, ein Update-Tool, an jeden der ausgewählten Beleuchtungstechnik-Busteilnehmer einen Initialisierungsbefehl mit der eindeutigen Update-Identifikation. Durch die Update-Identifikation können die Beleuchtungstechnik-Busteilnehmer, die mit dem Softwareupdate aktualisiert werden sollen, in einen sog. Bootloader-Modus versetzt werden. Die Update-Identifikation kann sich dabei von Task zu Task unterscheiden.

Nach Versenden des Initialisierungsbefehls beginnt die Zentraleinheit mit der Übermittlung eines Softwareupdates, d.h. mit dem z.B. blockweisen Übermitteln der Update-Software zu den ausgewählten Beleuchtungstechnik-Busteilnehmern. Die Update-Software muss dabei nicht auf der Zentraleinheit vorliegen sondern kann auch auf einem angeschlossenen Speichermedium oder einem ebenfalls an den Bus angeschlossenen Speicher gespeichert sein.

Bei der blockweisen Übermittlung werden periodisch Daten übermittelt die Softwareupdate-Daten und die Update-Identifikation umfassen. Damit kann jeder Beleuchtungstechnik-Busteilnehmer am Bus erkennen, ob empfangene Daten auszuwerten sind oder verworfen werden können. Daten werden so lange versendet, bis alle Softwareupdate-Daten übermittelt wurden. Nach Abschluss der Übermittlung findet eine Überprüfung in jedem Beleuchtungstechnik-Busteilnehmer statt, die mit einer "Update-Ende"-Nachricht an die Zentraleinheit abgeschlossen wird.

Dabei wird z. B. eine Prüfsumme an dem Beleuchtungstechnik-Busteilnehmer berechnet und zu der Zentraleinheit übermittelt. Anhand der Prüfsummeninformationen kann die Zentraleinheit feststellen, ob ein Beleuchtungstechnik-Busteilnehmer das gesamte Softwareupdate korrekt empfangen hat. Die Daten oder Blöcke sind auch mit Prüfsummeninformationen versehen und bei Empfang von Daten durch einen Beleuchtungstechnik-Busteilnehmer kann somit festgestellt werden, ob der Beleuchtungstechnik-Busteilnehmer versendete Daten korrekt empfangen hat. Nach Empfang von Daten/Blocks kann dann eine Nachricht/Rückmeldung an die Zentraleinheit versendet werden. Darin kann übermittelt werden, ob die Übermittlung erfolgreich war oder nicht.

Durch die Rückmeldung der Beleuchtungstechnik-Busteilnehmer ist es der Zentraleinheit möglich, korrekt empfangenen Blöcke anzuzeigen und nicht korrekt empfangene Blöcke zu protokollieren und dem Benutzer entsprechende Informationen anzuzeigen.

Mit dem beschriebenen Verfahren können Beleuchtungstechnik-Busteilnehmer unterschiedlicher Klassen parallel mit Softwareupdates versorgt werden. Im Vorfeld des Softwareupdates können die Tasks vorbereitet werden, die dann von der Zentraleinheit automatisiert durchgeführt werden. Durch die Überprüfung einzelner Blöcke in der blockweisen Übermittlung kann eine korrekte Übermittlung festgestellt werden. Zudem ist es möglich fehlerhaft übermittelte Blöcke zu ermitteln und lediglich die fehlerhaft übermittelten Blöcke erneut zu dem Beleuchtungstechnik-Busteilnehmer zu übermitteln.

Der Erfindung liegt daher die Aufgabe zu Grunde, eine neuartige Möglichkeit zum Aktualisieren von Beleuchtungstechnik-Busteilnehmern bereitzustellen.

### Zusammenfassung der Erfindung

Diese Aufgabe wird durch mit den unabhängigen Ansprüchen beanspruchte Erfindung gelöst. Weiterbildungen der vorliegenden Erfindung sind Gegenstand der Unteransprüche.

Gemäß einem Aspekt wird ein Verfahren zur Programmierung von Beleuchtungstechnik-Busteilnehmern angegeben, mit den Schritten: Ermitteln von zur Verfügung stehenden Beleuchtungstechnik-Busteilnehmern, z.B. Sensoren und/oder Aktoren, durch eine mit den Beleuchtungstechnik-Busteilnehmern über einen Bus verbundene Zentraleinheit, Auswahl, mittels der Zentraleinheit, mindestens eines Beleuchtungstechnik-Busteilnehmers aus den zur Verfügung stehenden Beleuchtungstechnik-Busteilnehmern, Versetzen der ausgewählten Beleuchtungstechnik-Busteilnehmer in einen Update-Modus, Zuteilung einer Update-Identifikation (Update-ID) an die Beleuchtungstechnik-Busteilnehmer und Übermitteln von einem mit der Update-Identifikation versehenen Update-Software, insbesondere Firmware, zu den ausgewählten Beleuchtungstechnik-Busteilnehmern.

Unter Beleuchtungstechnik-Busteilnehmern sind zu verstehen:
- Betriebsgeräte für Leuchtmittel wie bspw. Gasentladungslampen, LEDs, OLEDs, Halogenlampen etc.
- Sensoren, wie bspw. Bewegungs-, Rauch- oder Lichtsensoren und
- Steuereinheiten, ggf. als Benutzerschnittstelle ausgebildet (bspw. Dimmer, Touchscreen, etc...)

Es kann ermittelt werden, ob die Update-Software jeweils fehlerfrei übertragen wurde.

Ein Beleuchtungstechnik-Busteilnehmer kann in einen BetriebsModus versetzt werden, sobald die Update-Software fehlerfrei übermittelt und vollständig geschrieben wurde.

Ein Beleuchtungstechnik-Busteilnehmer kann im Update-Modus durch einen Bootloader betrieben werden.

Die Übermittlung der Update-Software kann blockweise erfolgen.

Es kann ermittelt werden, ob die Update-Software/Update-Software-Blöcke fehlerfrei übermittelt wurde/wurden und das Ermittlungsergebnis kann für jeden ausgewählten Beleuchtungstechnik-Busteilnehmer protokolliert werden.

Nach Abschluss der Übermittlung der gesamten Update-Software, können die Update-Software oder die Update-Software-Blöcke erneut an die Beleuchtungstechnik-Busteilnehmer übermitteln werden, für die eine nicht fehlerfreie/nicht erfolgte Übermittlung protokolliert wurde.

Die Programmierung von ausgewählten Beleuchtungstechnik-Busteilnehmern kann zeitgesteuert erfolgen.

Die Auswahl der Beleuchtungstechnik-Busteilnehmer kann nach Art, Hardware-Version und/oder Lage/Anbringungsort erfolgen.

Die Auswahl der Beleuchtungstechnik-Busteilnehmer kann Beleuchtungstechnik-Busteilnehmer unterschiedlicher Art umfassen.

Jeder Beleuchtungstechnik-Busteilnehmerart kann ein Update-Identifikator zugewiesen werden.

Für jede Beleuchtungstechnik-Busteilnehmerart kann eine Update-Software übermittelt werden.

Die übermittelte Update-Software/übermittelten Update-Software-Blöcke für einen Beleuchtungstechnik-Busteilnehmer kann in einen Puffer des Beleuchtungstechnik-Busteilnehmers geschrieben werden und der Puffer kann zumindest mehr als einen Block aufnehmen.

Jeweils alle in einem Puffer eines Beleuchtungstechnik-Busteilnehmers vorhandenen Update-Software-Blöcke können in einen Update-Software-Speicher geschrieben werden.

Alle in dem Puffer vorhandenen Update-Software-Blöcke können in den Update-Software-Speicher geschrieben werden, bevor neue Update-Software-Blöcke empfangen werden.

Nach dem Schreiben der Update-Software/einer oder mehrerer Update-Software-Blöcke kann eine Rückmeldung über den Erfolg des Schreibens an eine Zentraleinheit übermittelt werden.

Der Bootloader eines Beleuchtungstechnik-Busteilnehmers kann nach einem erfolgreichen Schreiben der Update-Software/aller Update-Software-Blöcke eine Fehlerfreiheit der Update-Software, z.B. durch Ermittlung und/oder Vergleich einer Prüfsumme, prüfen.

Gemäß einem ersten Aspekt stellt die Erfindung einen Beleuchtungstechnik-Busteilnehmer bereit, mit: Einem ersten Speicherbereich in dem ein Bootloader gespeichert ist, einem zweiten Speicherbereich zur Aufnahme einer Update-Software, einem Mittel zum Empfangen von Daten, einem Mittel zum Senden von Daten.

Der Beleuchtungstechnik-Busteilnehmer kann einen Puffer zur Aufnahme einer Update-Software oder von Update-Software-Blöcken aufweisen.

Die Update-Software versetzt beim Empfang eines Initialisierungsbefehls den Beleuchtungstechnik-Busteilnehmer in einen Update-Modus.

Der Bootloader empfängt eine Update-Identifikation.

Der Bootloader ermittelt anhand einer Update-Identifikation, einer Hardware-ID und/oder auf Grund anderer Parameter, ob eine empfangene Update-Software/empfangene Update-Software-Blöcke für den Beleuchtungstechnik-Busteilnehmer bestimmt sind oder nicht.

Der Bootloader kann im Update-Modus aktiv sein und eine Update-Software/Update-Software-Blöcke von einer Zentraleinheit empfangen und in den zweiten Speicherberiech schreiben.

Der Bootloader kann prüfen, ob die Update-Software fehlerfrei empfangen wurde.

Der Bootloader kann eine Rückmeldung an eine Zentraleinheit übermitteln, die eine nicht fehlerfreie Übermittlung der Update-Software/Update-Software-Blöcke anzeigt.

In einem zweiten Aspekt stellt die Erfindung eine computerbasierte Zentraleinheit bereit, die dazu eingerichtet ist, eine Steuersoftware auszuführen, zur Verfügung stehende Beleuchtungstechnik-Busteilnehmer zu ermitteln, für die ermittelten Beleuchtungstechnik-Busteilnehmer eine passende Update-Software zu ermitteln, eine Benutzerschnittstelle zur Auswahl von Beleuchtungstechnik-Busteilnehmern bereitzustellen, ausgewählte Beleuchtungstechnik-Busteilnehmer durch Übermitteln eines Initialisierungsbefehls in einen Update-Modus zu versetzen und eine Update-Software an die ausgewählten Beleuchtungstechnik-Busteilnehmer zu übermitteln.

Dabei wird der jeweilige der entsprechend ausgewählten Beleuchtungstechnik-Busteilnehmer bei Empfang des Initialisierungsbefehls in den Update-Modus wird. Zudem empfängt ein jeweiliger Bootloader der entsprechend ausgewählten Beleuchtungstechnik-Busteilnehmer eine Update-Identifikation. Außerdem ermittelt der jeweilige Bootloader der entsprechend ausgewählten Beleuchtungstechnik-Busteilnehmer anhand der Update-Identifikation, einer Hardware-ID und/oder auf Grund anderer Parameter, ob eine empfange Update-Software/empfangene Update-Software-Blöcke für den jeweiligen der entsprechend ausgewählten Beleuchtungstechnik-Busteilnehmer bestimmt ist/sind.

Die computerbasierte Zentraleinheit kann weiter dazu eingerichtet sein, Nachrichten/Rückmeldungen über die Übermittlung der Update-Software zu empfangen.

Die computerbasierte Zentraleinheit kann weiter dazu eingerichtet sein, Nachrichten über die Übermittlung der Update-Software zu protokollieren.

Die Update-Software kann in Update-Software-Blöcken übermittelt werden.

Die computerbasierte Zentraleinheit kann weiter dazu eingerichtet sein, nach erfolgreicher Übermittlung der Update-Software/Update-Software-Blöcke den entsprechenden Beleuchtungstechnik-Busteilnehmer in einen Betriebsmodus zu versetzen.

Die computerbasierte Zentraleinheit kann weiter dazu eingerichtet sein, nicht erfolgreiche übermittelte Update-Software/Update-Software-Blöcke erneut an entsprechende Beleuchtungstechnik-Busteilnehmer zu versenden.

Die Update-Software kann zeitgesteuert übermittelt werden.

Die computerbasierte Zentraleinheit kann jeder Beleuchtungstechnik-Busteilnehmerart eine Update-Identifikation zuweisen.

Die computerbasierte Zentraleinheit kann für jede Beleuchtungstechnik-Busteilnehmerart eine Update-Software übermitteln.

Schließlich stellt die Erfindung ein System aus mindestens einem Beleuchtungstechnik-Busteilnehmer, wie oben beschrieben, und mindestens einer computerbasierten Zentraleinheit, wie oben beschrieben, bereit.

### Kurze Beschreibung der Figuren

Fig. 1 zeigt eine beispielhafte Aufteilung des Speichers eines Beleuchtungstechnik-Busteilnehmers in einen Speicher für den Bootloader, Firmware (Update-Software/Applikation) und RAM-Speicher.
Fig. 2 zeigt eine beispielhafte Darstellung einer Protokollierung durch die Zentraleinheit.
Fig. 3 zeigt ein grobes Ablaufschema für ein Verfahren.
Fig. 4a zeigt eine detailliertere Flussdiagram-Darstellung eines Verfahrens aus Sicht der Zentraleinheit.
Fig. 4b stellt ein Flussdiagram dar, dass den Schritt "Aktualisierung durchführen" aus Fig. 4a verdeutlicht.

### Detaillierte Beschreibung der Erfindung

Die Erfindung erlaubt es, Beleuchtungstechnik-Busteilnehmer einzusetzen, deren Software sich aktualisieren lässt und die damit nicht wegen Fehlerkorrekturen oder zur Bereitstellung funktionalen Erweiterungen ausgetauscht werden müssen.

Dazu muss ein Beleuchtungstechnik-Busteilnehmer mit einem Bootloader ausgestattet sein, der ein Softwareupdate der Firmware erlaubt. Soweit im Folgenden von einem Softwareupdate der Firmware mit Update-Software die Rede ist, ist zu verstehen, dass auch Softwareupdate anderer Software, insbesondere einer Applikation, entsprechend durchgeführt werden können und auch andere Software-Komponenten aktualisiert werden können. Das Aktualisieren der Firmware wird dabei auch als "Flashen" bezeichnet, wobei insbesondere das Ausschreiben der Update-Software in einen für die Update-Software vorgesehenen Speicher gemeint ist.

Zunächst werden die hardwarenahen Aspekte des Bootloaders beschrieben.

Der Bootloader ist möglichst generisch implementiert, um sich leicht für verschiedene Hardwareplattformen anpassen zu lassen. Dabei können für jeden Beleuchtungstechnik-Busteilnehmer zumindest kleine Anpassungen des Bootloaders durchgeführt und so gerätespezifische Bootloader erzeugt werden.

Der Bootloader verwendet zur grundlegenden Ansteuerung der Hardware, für die er zum Einsatz kommt, eine Abstraktionsschicht, eine sog. Hardware-Abstraction-Layer (HAL), auf der die Firmware/die Applikation aufbaut.

Auch können entsprechende Treiber für verschiedenen Hardware-Varianten (z. B. LM3SXXX Controllerversionen, ...) vorhanden sein. Der Bootloader kann zudem Protokollimplementierungen für verschiedene unterstützte Schnittstellen (serielle, Ethernet, USB, ...) sowie Low-Level-Routinen für eine Zugriff auf diverse Hardwareelemente umfassen. Der Bootloader kann dabei auch auf bereits existierende Protokolle zurückgreifen (z. B. einen Protokoll-Stack für den Luxmate-Bus).

Der Bootloader hat ebenfalls Zugriff auf einen Speicher (z.B. einen Flash-Speicher) und bietet der Firmware entsprechende Funktionen zum Zugriff auf diesen Speicher an. Für ein Softwareupdate greift der Bootloader über eine Speichersteuerung und deren Register auf den Speicher zu. Dabei stehen unter anderem eine oder mehrere der folgenden Funktionen zur Verfügung:
- Wählen einer Zeit für das Aktualisieren passend zu einer Taktfrequenz eines eingesetzten Prozessors,
- Löschen einer Speicherseite (z. B. einer ein Kilobyte (kB) großen Flash-Speicherseite),
- Schreiben eines Blocks in den Speicher.

Der Block kann dabei z.B. mit einer durch vier teilbaren Adresse beginnen und ein Vielfaches von 4 Byte lang sein. Es kann dabei vorgesehen sein, eine Speicheradresse maximal zweimal zu beschreiben bevor eine entsprechende Speicherseite für die Speicheradresse gelöscht wird.

Auch ist es vorgesehen, den Speicher für die Firmware in Blöcken vor versehentlichem Überschreiben zu schützen. Dabei ist jedoch zu beachten, dass bei einem persistenten Speichern des Schutzes unter Umständen der Bootloader nicht mehr aktualisiert werden kann, da der Schreibschutz nicht umgekehrt werden kann. Deshalb ist vorgesehen bei jedem Zurücksetzen (Reset) des Beleuchtungstechnik-Busteilnehmers den Schreibschutz durch den Bootloader zu setzen und von einer persistenten Speicherung abzusehen. Das Aktivieren des Schutzes kann durch ein Setzen eines Wertes in einem Register geschehen.

Zur Signalisierung eines aktuellen Bootloader-Betriebszustands ist vorzugsweise ein Signalisierungsmittel, z.B. eine LED, an dem Beleuchtungstechnik-Busteilnehmer vorgesehen. Damit kann ein Zustand der auf dem Beleuchtungstechnik-Busteilnehmer ausgeführten Software signalisiert werden, z.B. ob die Firmware defekt ist und/oder der Bootloader aktiv auf ein Softwareupdate wartet. Dies kann z.B. durch ein optisch und/oder ein akustisch wahrnehmbares Signal erfolgen. Ein davon unterscheidbares Signal wird erzeugt, wenn der Bootloader über einen Initialisierungsbefehl in einen Initialisierungszustand versetzt wurde.

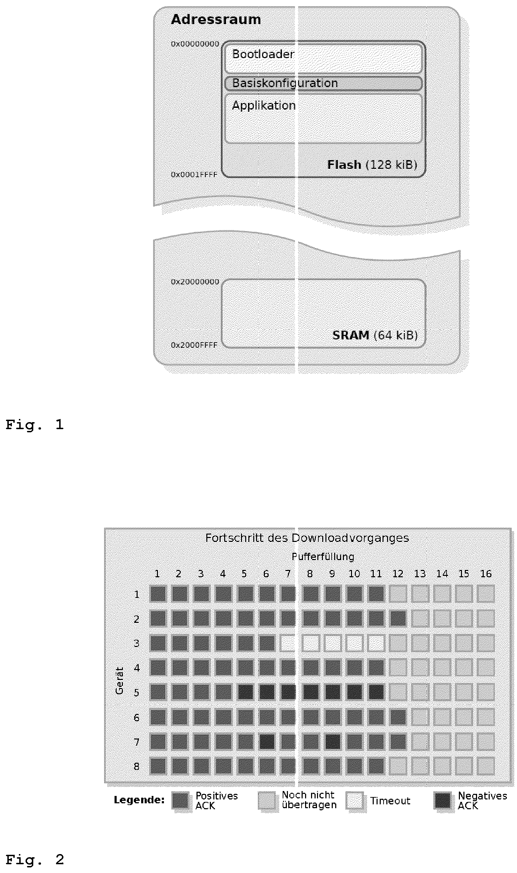

In dem Beleuchtungstechnik-Busteilnehmer können mehrere Speichereinheiten und/oder Speicherbereiche vorgesehen sein. Im Allgemeinen teilen sich Bootloader und Firmware einen Speicher (z.B. Flashspeicher), in dem der Programmcode beider Komponenten sowie etwaige andere Parameter (z.B. Konfigurationen) gespeichert sind. Während des Betriebs steht dann ein weiterer Speicher (z.B. RAM-Speicher, SRAM) oder Speicherbereich zur Ausführung des Bootloaders bzw. der Firmware zur Verfügung, wobei die Komponenten normalerweise exklusiv ausgeführt werden. Eine beispielhafte Speicheraufteilung ist in Fig. 1 dargestellt.

Es ist darauf zu achten, dass Schutzvorkehrungen getroffen sind, die verhindern, dass sich die beiden Komponenten nicht gegenseitig überschreiben.

Damit der Bootloader eines Beleuchtungstechnik-Busteilnehmers individuell angesprochen werden und für ein Softwareupdate relevante Informationen bereitstellen kann, müssen durch ihn unabhängig von einem Funktionieren der Firmware/Applikation bestimmte Informationen bereitgestellt werden.

Dies sind z.B.:
- Versionsnummer des Bootloaders und eines Bootloader-Protokolls,
- Seriennummer (Basis-P-Nummer) des Beleuchtungstechnik-Busteilnehmers, um den Bootloader in die Lage zu versetzen, über die Seriennummer adressierte Daten zu empfangen,
- eine Hardware-ID, um entscheiden zu können, ob ein Softwareupdate für den aktuellen Beleuchtungstechnik-Busteilnehmer geeignet ist und um nicht passende Softwareupdates ablehnen zu können,
- eine Größe des Speichers, um ungültige Speicheradressen für ein Softwareupdate zurückweisen zu können,
- eine Startadresse des Firmware-Bereiches um eine Prüfsumme berechnen zu können,
- die Größe der Update-Software, um den Speicherbereich festzulegen, in den die Update-Software geschrieben wird,
- eine Prüfsumme der Firmware, um bei jedem Start des Controllers zu prüfen, ob eine gültige Firmware vorliegt durch Vergleich einer Prüfsumme, die z.B. im Bootloader gespeichert ist und/oder übermittelt wird, mit einer Prüfsumme der Firmware,
- einen Einsprungpunkt der Firmware, um den Start der Firmware zu ermöglichen.

Damit in ein Gerät passende Update-Software geladen wird, ist die eingesetzte Hardware, die aktuell vorhandene Software sowie deren aktuelle Konfiguration zu beachten. Beispielsweise ist es zu vermeiden, eine Update-Software für einen Beleuchtungstechnik-Busteilnehmer auf einen Beleuchtungstechnik-Busteilnehmer mit einer komplett verschiedener IO-Beschaltung zu laden.

Durch ein Softwareupdate können aber auch Beleuchtungstechnik-Busteilnehmer mit derselben Hardware in andere Geräte mit der gleichen Hardware umgewandelt werden. Beispielsweise kann ein IR-Empfänger in einen AWS-Sensor 'umgewandelt' werden, wenn die zugrunde liegende Hardware dafür vorbereitet ist, d.h. eine Funktionalität kann entsprechend geändert werden.

Neben dem Bootloader und der Firmware muss auch eine Basiskonfiguration auf dem Beleuchtungstechnik-Busteilnehmer gespeichert werden und vor einem versehentlichen Überschreiben geschützt werden. Die Basiskonfiguration kann nach einem Softwareupdate leer/nicht initialisiert sein. Die Firmware/Update-Software kann bei Bedarf aber unter bestimmten Voraussetzungen, z.B. dem ersten Start nach dem Softwareupdatevorgang, bestimmte Werte für die Basiskonfiguration festlegen. In der Basiskonfiguration enthaltene Werte sind z.B. eine P-Nummer, eine Modul-ID, ein Hardware-Stand, und ggf. eine MAC-Adresse bei Ethernetfähigen Geräten. Für diese Basiskonfiguration kann beispielsweise ein Kilobyte vorgesehen sein. Die Firmware/Update-Software kann nach einem Neustart auch die Basiskonfiguration überschreiben. Weiter ist vorgesehen eine Sicherungskopie der Basiskonfiguration in einem anderen Speicherbereich zu speichern, um im Fehlerfall die Basiskonfiguration wiederherstellen zu können.

Um eine möglichst effiziente Speicherung der Basiskonfiguration zu ermöglichen, kann es vorgesehen sein, Schlüssel-Wert-Paare sequentiell in Speicherseiten abzulegen und Änderungen jeweils anzuhängen, bis die Speicherseite voll ist oder ein Neustart ausgeführt wird. Dabei kann das zuletzt geschriebene Schlüssel-Wert-Paar als aktuell definiert werden. Eine Prüfzahl (magic number) kann dabei geändert werden, sobald Daten angehängt werden. Eine falsche Prüfzahl kann auch einen Defekt anzeigen.

Wenn eine Speicherseite fragmentiert ist, können die Schlüssel-Wert-Paare in eine andere Speicherseite kopiert werden. Ist die Speicherseite defekt, so können aus einer Sicherungskopie oder einer anderen Speicherseite Wert-Schlüssel-Paare in die defekte Seite kopiert werden (defekt bezeichnet hier eine fehlerhafte Speicherung von Schlüssel-Wert-Paaren). Eine Suche nach einem Schlüsselpaar kann beendet werden, wenn ein spezielles ausgezeichnetes Schlüsselpaar gefunden wurde.

Um einen effizienten Zugriff auf nicht lückenlos aufsteigend gespeicherte Schlüssel zu ermöglichen, können Schlüssel-Wert-Paare in dem RAM-Speicher zwischengespeichert werden. Diese Vorgehensweise hat den Vorteil, dass nicht bei jeder Änderung eine Speicherseite gelöscht und neu geschrieben werden muss. Dabei ergibt sich ein Geschwindigkeitsvorteil, wenn mehrere Schlüssel-Wert-Paare geändert werden.

In dem Bootloader sind so wenig wie möglich Kommandos implementiert, um Speicherplatz für die Update-Software/Applikation zu sparen. Es können jedoch z.B. Befehle zum Test des jeweiligen Beleuchtungstechnik-Busteilnehmers im Bootloader implementiert sein.

Weist ein Beleuchtungstechnik-Busteilnehmer mehrere Bootloader und Firmware auf, so ist es auch vorgesehen, die Firmware einzelner Komponenten eines oder mehrerer Beleuchtungstechnik-Busteilnehmer separat zu aktualisieren.

Es kann auch vorgesehen sein, die Firmware inkrementell zu aktualisieren, so dass nicht die gesamte Firmware, sondern nur Teile davon bei einem Softwareupdate zu aktualisieren sind.

Es kann auch vorgesehen sein, einen Mechanismus bereitzustellen, mit dem eine unterbrochene Aktualisierung wieder aufgenommen werden kann. Vorzugsweise wird jedoch für die blockweise Übermittlung protokolliert, welche Blöcke erfolgreich geschrieben wurden und welche nicht. Nur nicht erfolgreich geschriebene Blöcke müssen dann nochmals geschrieben werden. Auch kann vorgesehen sein, dass der Beleuchtungstechnik-Busteilnehmer mitprotokolliert, welche Teile der Update-Software erfolgreich geschrieben wurden. Dadurch kann an dem Beleuchtungstechnik-Busteilnehmer selbst abgefragt werden, ob und inwieweit die Aktualisierung durchgeführt wurde und welche Daten neu übermittelt werden müssen.

Zu Beginn eines Aktualisierungsvorganges empfängt der Bootloader oder die Firmware/Applikation des Beleuchtungstechnik-Busteilnehmers einen Initialisierungsbefehl, der den Bootloader aktiviert und eine Update-Identifikation (Update-ID) an den Beleuchtungstechnik-Busteilnehmer zuweist. Daraufhin wechselt der Beleuchtungstechnik-Busteilnehmer in den Bootloader-Modus. Der Bootloder speichert die Upate- Identifikation für nachfolgende Kommandos. Durch die Update- Identifikation wird definiert, welche Update-Software für den Beleuchtungstechnik-Busteilnehmer vorgesehen ist. Beispielsweise können verschiedene Klassen von Beleuchtungstechnik-Busteilnehmern mit unterschiedlichen Update-Identifikationen versehen werden, um diese parallel mit einem Softwareupdate aber verschiedener Update-Software zu aktualisieren. Es können aber, wie bereits oben beschrieben, auch alle, einzelne oder Klassen/Gruppen von Beleuchtungstechnik-Busteilnehmern ausgewählt werden.

Wird von einem Bootloader nach der Initialisierung für eine gewisse Zeit kein Teil einer Update-Software empfangen, so startet der Bootloader wieder die bereits vorliegende Firmware/Applikation. Der Bootloader selber kann nur über ein spezielles Verfahren aktualisiert werden, da beispielsweise ein Stromausfall während der Bootloader-Aktualisierung den entsprechenden Beleuchtungstechnik-Busteilnehmer unbrauchbar machen würde.

Es steht weiter ein Reset-Befehl zur Verfügung, der ebenfalls zusammen mit der Update-Identifikation übermittelt werden kann, um so einen Updatevorgang abbrechen zu können.

Weiter steht ein Befehl zum Abfragen von Bootloaderinformationen bereit. Die Version der Firmware/Applikation kann dabei bereits vor dem Versetzen des Controllers in den Bootloadermodus abgefragt werden. Der Bootloader kann auf einen Abfragebefehl hin entsprechende Informationen z.B. an die Zentraleinheit übermitteln.

Der Bootloader stellt weiter einen Schreibbefehl bereit, mit dem die Update-Software/Update-Software-Blöcke in den dafür vorgesehenen Speicher(bereich) geschrieben werden. Die übermittelten Daten werden dabei komprimiert (z.B. mit RLE) übermittelt und mit einem Vorspann und einem Nachspann versehen. Damit können z.B. sich wiederholende Bytesequenzen kodiert werden, ohne diese explizit zu verschicken. Durch die Kompression können somit mehr Daten auf einmal übermittelt werden. Beim Start des Softwareupdates kann zudem die Firmware/Applikation als ungültig markiert werden, so dass im Falle eines fehlerhaften Updates der Beleuchtungstechnik-Busteilnehmer im Bootloader-Modus verbleibt und die Firmware auch nach einem Reset nicht startet. Nach einem erfolgreichen Updatevorgang kann ebenfalls gespeichert werden, dass ein Updatevorgang stattgefunden hat. Damit können, z.B. bei einem erneuten Start spezielle Funktionen ausgeführt werden, z.B. eine Aktualisierung der Basiskonfiguration.

Da das Update von Beleuchtungstechnik-Busteilnehmern über einen Bus erfolgt, ist es erforderlich, eine sinnvolle Adaption der Übermittlungsgeschwindigkeit bei simultanen/parallelen Updatevorgängen auf mehreren Geräten durchzuführen. Speziell der Einfluss der Updategeschwindigkeit am Beleuchtungstechnik-Busteilnehmer ohne eine Bestätigung durch die entsprechenden Geräte ist hier problematisch, da es keinen Anhaltspunkt dafür gibt, ob die Update-Software zu schnell an die jeweiligen Beleuchtungstechnik-Busteilnehmer verschickt wird. Bei einem zu schnellen Versenden der Update-Software kann es sein, dass Geräte neue Daten nicht annehmen können.

Die vorliegende Erfindung löst dieses Problem, indem Daten-Übermittlung und eigentliches Schreiben des Softwareupdates in den entsprechenden Speicher des Beleuchtungstechnik-Busteilnehmers voneinander entkoppelt werden. Je nach Speicherplatz können mehrere Datenblöcke am Stück übermittelt werden, ohne dass die Annahme der Update-Software-Blöcke durch die Ausführung von Updateroutinen an den Beleuchtungstechnik-Busteilnehmern aufgehalten werden. Das Schreiben des Softwareupdates kann dabei erst auf eine separate Anforderung hin geschehen. Geräte, die mit dem Softwareupdate fertig sind, melden sich mit einer Nachricht, z.B. bei der Zentraleinheit. Diese wartet mit einer erneuten Übermittlung, bis Antworten von allen zu aktualisierenden Geräten vorliegen oder eine Zeitüberschreitung aufgetreten ist. Die Antworten der zu aktualisierenden Geräte können dabei Erfolgsmeldungen oder Fehlermeldungen sein.

Die Zentraleinheit registriert Fehlermeldungen oder Zeitüberschreitungen, wobei jedoch kein unmittelbarer Wiederholungsversuch erfolgt, um die Aktualisierung der übrigen Geräte nicht zu verzögern. Fehlerhafte Softwareupdates werden später behandelt, wenn bereits erfolgreich aktualisierte Geräte wieder aus dem Bootloader-Modus entlassen wurden.

Damit der Bus nicht zu einem Flaschenhals wird, muss die Anzahl der von den Geräten eingegangenen Meldungen im Verhältnis zu der zu übermittelnden Update-Software einen geringen Anteil ausmachen. Daher ist in den Beleuchtungstechnik-Busteilnehmern ein relativ großer Puffer, z.B. 4-8 Kilobyte, vorgesehen. Damit wird die Zahl der Aktualisierungsvorgänge an den Beleuchtungstechnik-Busteilnehmern reduziert. Es können mehrere Update-Software-Blöcke übermittelt werden bevor an dem Beleuchtungstechnik-Busteilnehmer ein Schreiben des Softwareupdates gestartet wird. Bei einer Größe des Puffers von z.B. 8 Kilobyte kann eine Update-Software damit z.B. in 8 Schritten übermittelt und in den jeweiligen Speicher geschrieben werden, wenn die Update-Software 64 Kilobyte groß ist.

Besitzt ein Beleuchtungstechnik-Busteilnehmer mehrere Adressen, über die er von der Zentraleinheit adressiert werden kann, so ist vorgesehen, dass sich der Beleuchtungstechnik-Busteilnehmer stets nur mit einer vorbestimmten Adresse auf eine Aktualisierungsabfrage hin meldet, um eine mehrfache Übermittlung des Softwareupdates zu dem Beleuchtungstechnik-Busteilnehmer zu verhindern.

Auf der Zentraleinheit wird eine Steuersoftware ausgeführt, die vorzugsweise die Softwareaktualisierung kontrolliert und steuert.

Die Steuersoftware stellt für den Benutzer beispielsweise eine graphische Benutzeroberfläche bereit, über die der Benutzer auswählen kann, welche Geräte aktualisiert werden sollen. Die am Bus verfügbaren Geräte und deren Arten sowie zum Beispiel Hardware und/oder Softwareversionen werden durch eine Abfrage des Busses durch die Steuersoftware (polling) ermittelt. Dabei ist auch vorgesehen, dass bei Beleuchtungstechnik-Busteilnehmern, deren Firmware nicht mehr funktioniert und die sich im Bootloader-Modus befinden, ebenfalls eine Meldung an die Steuersoftware zurückgegeben werden kann. Aus den erhaltenen Antworten erstellt die Steuersoftware eine Liste der am Zweirahtbus zur Verfügung stehenden Beleuchtungstechnik-Busteilnehmer. Die Antworten an die Steuersoftware enthalten dabei zum Beispiel eine Hardware-ID aufgrund derer die Steuersoftware eine Liste kompatibler Update-Softwareversionen für eine durch die Hardware-ID identifizierte Hardwarebasis erstellen kann. Bei Beleuchtungstechnik-Busteilnehmern, die korrekt funktionieren, können von der Firmware auch weitere zusätzliche Informationen zurückgegeben werden.

Damit die Steuersoftware ermitteln kann, welche Update-Softwareversionen zu einem Beleuchtungstechnik-Busteilnehmer kompatibel sind, sind in der Update-Software zum Beispiel folgende Daten gespeichert:
- die Hardware-IDs, für die die Update-Software eingesetzt werden kann
- eine genaue Gerätebezeichnung,
- eine genaue Update-Softwarekennzeichnung,
- eine Versionsnummer der Update-Software,
- eine Prüfsumme,
- eine Größenangabe zur Update-Software (Anzahl der Bytes der Update-Software),
- eine maximal unterstützte Blockgröße (diese kann alternativ auch durch die in passenden Blöcken aufgeteilte Update-Softwaredaten vorgegeben sein) und/oder
- die eigentlichen Update-Softwaredaten.

Nachdem die Steuersoftware alle am Bus verfügbaren Beleuchtungstechnik-Busteilnehmer ermittelt hat, können die ermittelten Daten dem Benutzer angezeigt werden. Der Benutzer kann nun anhand der dargestellten Informationen einzelne Beleuchtungstechnik-Busteilnehmer oder auch Klassen/Gruppen von Beleuchtungstechnik-Busteilnehmern für ein Softwareupdate durch passende/ausgewählte Update-Softwareversionen auswählen. Dabei wird durch die Steuersoftware durch eine Versionsprüfung ermittelt, ob ein Softwareupdate überhaupt sinnvoll ist, z.B. von welcher Firmware auf welche andere überhaupt Firmware aktualisiert werden kann.

Ein Softwareupdate kann damit einen oder mehrere der folgenden Schritte umfassen:
- Auswahl der zu aktualisierenden Beleuchtungstechnik-Busteilnehmer in der Softwaresteuerung,
- Auswählen einer Aktualisierungsfunktion,
- Abfragen der am Bus zur Verfügung stehenden Beleuchtungstechnik-Busteilnehmer durch die Steuersoftware,
- Empfangen der Antworten von den Beleuchtungstechnik-Busteilnehmern am Bus durch die Steuersoftware, wobei jeder der Beleuchtungstechnik-Busteilnehmer eine Adresse liefert,
- Bilden einer Schnittmenge aus den ausgewählten Beleuchtungstechnik-Busteilnehmern und den Beleuchtungstechnik-Busteilnehmern, die auf die Abfrage durch die Steuersoftware geantwortet haben,
- Darstellen der Beleuchtungstechnik-Busteilnehmer, die aktualisiert werden können, wobei auch die nicht aktualisierbaren Beleuchtungstechnik-Busteilnehmer davon unterscheidbar dargestellt werden können,
- Start des Aktualisierungsvorgangs nach Bestätigung durch den Benutzer, wobei der Benutzer auch festlegen kann, dass die Softwareaktualisierung zu einem bestimmten Zeitpunkt geschehen soll,
- Protokollieren des Fortschritts des Aktualisierungsvorgangs/der Aktualisierungsvorgänge, um zu ermitteln, welche Aktualisierung welches Beleuchtungstechnik-Busteilnehmers (teilweise) erfolgreich/fehlerhaft ist.

Die Protokollierung des Aktualisierungsfortschritts kann beispielsweise wie in Fig. 2 gezeigt erfolgen. In der Figur ist zu erkennen, dass 12 komplette Pufferinhalte übermittelt wurden. Die Beleuchtungstechnik-Busteilnehmer 2, 6 und 7 haben das Schreiben der entsprechenden Blöcke bereits positiv bestätigt. Von Beleuchtungstechnik-Busteilnehmer 3 sind seit Übermittlung der Blöcke für die siebte Pufferfüllung keine Bestätigungen mehr zurückgekommen (dies kann ein Indiz dafür sein, dass der entsprechende Beleuchtungstechnik-Busteilnehmer vom Bus getrennt wurde). Bei Beleuchtungstechnik-Busteilnehmer 5 werden seit der fünften Pufferfüllung nur noch negative Bestätigungsmeldungen empfangen (dies kann auf Kommunikationsprobleme hindeuten). Beleuchtungstechnik-Busteilnehmer 7 hat bei der sechsten und neunten Pufferfüllung eine negative Bestätigung gesendet (dies kann eventuell auf einen Prüfsummenfehler hinweisen).

Die Beleuchtungstechnik-Busteilnehmer mit fehlerhaft übermittelten Blöcken können nach Abschluss des Aktualisierungsvorgangs einzeln oder in Gruppen nochmal in den Bootloader-Modus versetzt werden, um einen weiteren Versuch zu unternehmen, die Blöcke, für die negative Nachrichten oder gar keine Nachrichten an die Steuersoftware übermittelt wurden, nochmals zu übermitteln.

Die Protokollierungsinformationen können gespeichert werden, sodass bei einem Absturz der Steuersoftware der Fortschritt der Aktualisierung ohne zusätzliche Buskommunikation wieder hergestellt werden kann.

Sollte ein Beleuchtungstechnik-Busteilnehmer während des Aktualisierungsvorgangs ausfallen, so kann die Wiederaufnahme der Aktualisierung wie folgt geschehen:
Es ist besonderes Augenmerk darauf zu legen, dass die Steuersoftware die Update-Identifikation für das Softwareupdate wiederherstellen kann. Um dies zu erreichen, versetzt die Steuersoftware einen Beleuchtungstechnik-Busteilnehmer, der für die Aktualisierung ausgewählt ist, erneut in den Bootloader-Modus, wenn sich dieser aufgrund einer fehlerhaften Firmware mit einer entsprechenden Meldung bei der Steuersoftware meldet. Die Steuersoftware übermittelt dabei die Update-Identifikation zu dem entsprechenden Gerät, woraufhin dieses wieder an dem Aktualisierungsvorgang teilnimmt. Nicht zu dem Beleuchtungstechnik-Busteilnehmer übermittelte Blöcke (die zum Beispiel durch das erneute Versetzen in den Bootloader-Modus "verpasst" wurden), werden wir oben beschrieben nach Abschluss des ersten Aktualisierungsvorgangs erneut versendet.

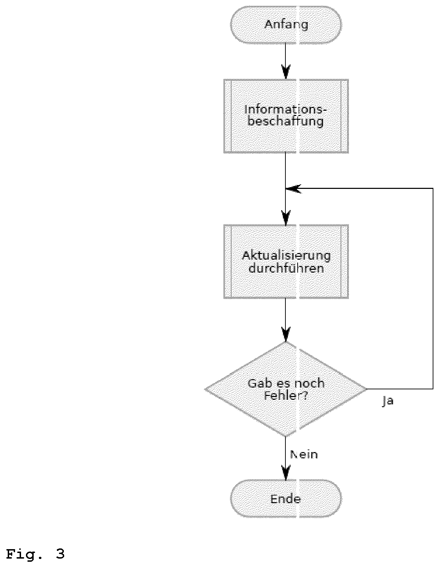

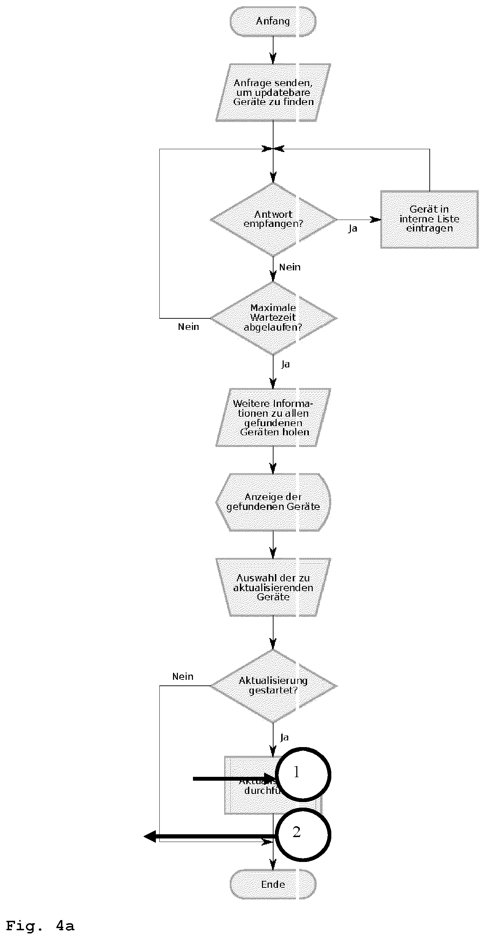

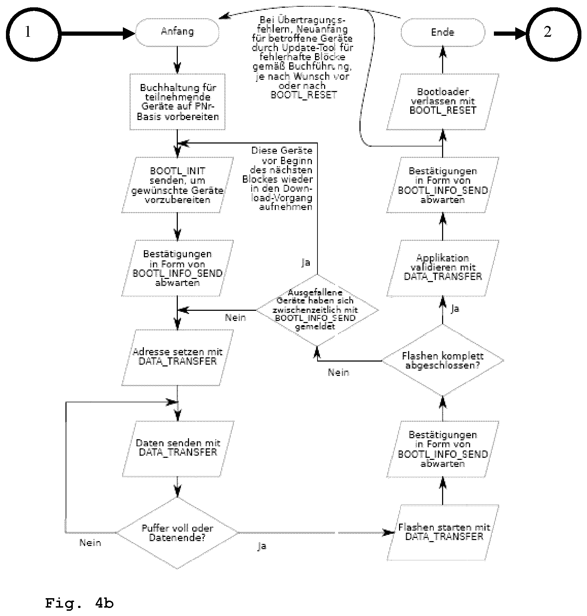

Dabei ist natürlich zu verstehen, dass die Update-Software, die zu einem Beleuchtungstechnik-Busteilnehmer übermittelt wird, nicht sequentiell in den vorgesehenen Speicher geschrieben werden muss, sondern entsprechend der übermittelten Blöcke auch unzusammenhängend geschrieben werden kann. Erst wenn alle Blöcke erfolgreich übermittelt und in den Speicher geschrieben wurden, liegt die neue Update-Software vollständig und zusammenhängend vor. Fig. 3 zeigt schematisch einen entsprechenden Aktualisierungsvorgang. Fig. 4a stellt schematisch den Aktualisierungsvorgang aus Sicht der Steuersoftware/Zentraleinheit dar. Fig. 4b beschreibt genauer, wie der Schritt der Aktualisierung abläuft.

Um einen Bootloader jederzeit durch ein entsprechendes Kommando starten zu können und um Informationen über den Bootloader ermitteln zu können, müssen verschiedene Dienste durch die Firmware bereit gestellt werden. Diese sind zum Beispiel:

| Dienst | Zweck |
|---|---|
| Abfrage der Versionsnummer des Bootloaders etc. | Ermöglicht es, Fragen nach der Version des Bootloaders zu beantworten. |
| Start des Bootloaders | Ermöglicht in den Bootloader-Modus zu wechseln. |
| Gerät neustarten ohne Speicherschutz | Dieser Dienst ist u. a. erforderlich um einer Bootloader- Update-Software das Updaten des Bootloaders zu ermöglichen. Nach Setzen einer speziellen Markierung (Magic-Number) im RAM wird der Bootloader nach einem Reset nicht den temporären Speicher-Schutz aktivieren, so dass ein Update des Bootloaders möglich wird. Es gibt hierbei verschiedene Speicherbereiche, die unabhängig voneinander entsperrt werden können. |

Weiter müssen von der Firmware/Update-Software Parameter an den Bootloader übergeben werden können. Die Schwierigkeit hierbei ist, dass zum Starten des Bootloaders ein Reset des Beleuchtungstechnik-Busteilnehmers durchgeführt werden muss. Eine persistente Speicherung solcher Parameter z.B. in einem EEPROM ist jedoch nicht sinnvoll, da hierfür ein EEPROM-Treiber in den Bootloader integriert werden muss, was diesen vergrößert. Daher ist eine Übergabe über z.B. den RAM-Speicher vorgesehen. Diese Übergabe kann wie im Folgenden beschrieben erfolgen:
- die Firmware/Update-Software schreibt bestimmte Parameter an fest vorgegebene Speicher-Adressen,
- danach löst die Firmware/Update-Software einen Reset aus (Software-Reset),
- der Bootloader startet und erkennt, dass der Neustart in Folge eines explizit ausgelösten Resets (Software-Reset) erfolgt (bei anderen Reset-Ursachen wird der Inhalt des Speichers ignoriert),
- der Bootloader liest die entsprechenden Parameter aus dem RAM und setzt diesen unmittelbar danach zurück.

Eine persistente Speicherung der Update-Identifikation hat ebenfalls den Nachteil, dass diese Speicherplatz benötigt und, bei einer Speicherung in einem EEPROM, ein zusätzlicher entsprechender Treiber im Bootloader erforderlich wäre. Zudem könnte die Update-Identifikation bereits veraltet sein, wenn das Gerät neu gestartet wird. Im schlimmsten Fall könnte eine weitere Softwareaktualisierung mit einer wiederverwendeten Update-Identifikation im Gange sein, die gar nicht für das Gerät bestimmt ist. Eine Verwaltung der Update-Identifikation durch die Steuersoftware ist deshalb vorzuziehen.

Um eine sichere Aktualisierung zu gewährleisten, sind verschiedene Sicherheitsmechanismen vorgesehen. Zunächst ist bei jedem Start des Beleuchtungstechnik-Busteilnehmers der Bootloader anzuspringen, wozu entsprechende Vektoren in dem Speicher passend zu setzen sind. Durch Anspringen des Bootloaders besteht bei defekter Firmware/Update-Software die Möglichkeit, das Gerät durch eine Softwareaktualisierung wieder in Betrieb nehmen zu können.

Um zu gewährleisten, dass ein Beleuchtungstechnik-Busteilnehmer fehlerfrei funktioniert, muss sich die verwendete Firmware/Update-Software in einem fehlerfreien Zustand befinden. Der Bootloader prüft daher bei jedem Start die Konsistenz der Firmware/Update-Software. Dazu kann beispielsweise eine Signatur einer bestimmten Stelle im Speicher über eine einfache arithmetische Prüfsumme erfolgen oder eine komplette Prüfsumme für die Firmware/Update-Software (CRC) verglichen oder ermittelt werden. Sollte bei erfolgreicher Überprüfung der Firmware/Update-Software, also bei einer nach Prüfsumme einwandfreien Firmware/Update-Software, dennoch ein Fehler auftreten, so ist es vorgesehen, dass der Bootloader einen "Watchdog" des Prozessors verwendet, um einen fehlerhaften Ladevorgang der Firmware/Update-Software zu registrieren.

Auch ist zu prüfen, ob ein Softwareupdate überhaupt für einen Beleuchtungstechnik-Busteilnehmer bestimmt ist. Deshalb muss der Bootloader bewerten können, ob ein Softwareupdate für ihn bestimmt ist. Dafür ist in der Update-Software der oben genannte Header vorgesehen, der den genauen Typ des Beleuchtungstechnik-Busteilnehmers inklusive eventueller Hardwarerevisionen enthält. Der Bootloader beurteilt dann aufgrund eines Vergleichs des Headers mit gerätespezifischen Informationen, ob er die Aktualisierung durchführen darf.

Um ein Softwareupdate auch aus dem normalen Betrieb heraus zu initiieren, muss die Firmware/Update-Software eine Möglichkeit haben, den Bootloader zu starten, nachdem eine entsprechende Aufforderung von ihr empfangen wurde. Die Firmware/Update-Software setzt zum Beispiel ein "Flag" im Speicher und aktiviert durch einen Watchdog-Reset den Bootloader. Das Flag wird dann beim Start ausgewertet und verhindert, dass der Bootloader die Firmware/Update-Software startet, sondern stattdessen auf weitere Bootloader-Befehle wartet. Sofern eine funktionsfähige Firmware/Update-Software vorliegt, kann der Bootloader durch ein bestimmtes Kommando wieder verlassen werden.

Sollte eine Firmware/Update-Software nicht in der Lage sein, einen Bootloader zu starten, so wird der Bootloader dennoch die Firmware/Update-Software laden, wenn diese zum Beispiel aufgrund einer Prüfsumme als fehlerfrei angezeigt wird.

Um ein ständiges Laden einer als fehlerfrei ermittelten aber dennoch fehlerhaften Firmware/Update-Software zu verhindern, ist vorgesehen, dass der Bootloader während des Startvorgangs eine vorbestimmte Zeit auf einen Initialisierungsbefehl wartet. Empfängt der Bootloader innerhalb dieser Zeit einen Initialisierungsbefehl, so startet er die Firmware/Update-Software nicht, sondern begibt sich in den Bootloader-Modus. Wird kein Initialisierungsbefehl empfangen, so wird die Firmware/Update-Software normal gestartet. Damit die vorbestimmte Zeit nicht nutzlos verstreicht, ist es zudem vorgesehen, während dieser Zeit gleichzeitig eine Prüfsummenbildung für die Konsistenzprüfung der Firmware/Update-Software durchzuführen. Eine vorbestimmte Verzögerung kann zum Beispiel 1-3 Sekunden betragen.

Zusätzliche Sicherheit bei der Übermittlung wird dadurch erreicht, dass die versendeten Daten mit einer Sequenznummer versehen sind. Dadurch wird eine falsche Zuordnungen oder Vertauschungen vermieden. Zudem sind die Daten und die übermittelten Blöcke mit einer Prüfsumme (CRC) gesichert. Weiter wird die Update-Softwareintegrität durch eine Prüfsumme gesichert und kontrolliert (CRC, CRC32).

Es kann auch vorgesehen sein, eine permanente Überprüfung der Firmware/Update-Software durch zyklische Bildung einer Prüfsumme zu sichern.

Es kann auch ein Update des eigentlichen Bootloaders vorgesehen sein. Da ein Bootloader-Update besonders kritisch ist und bei einem fehlerhaft erfolgten Bootloader-Update der Beleuchtungstechnik-Busteilnehmer unbenutzbar wird, sind folgende Updatemechanismen vorgesehen:
Zunächst wird eine Bootloader-Update-Software in den Speicher des Beleuchtungstechnik-Busteilnehmers übermittelt und geschrieben wie dies für eine Update-Software oben beschrieben ist. Die eine Bootloader-Update-Software prüft nach einem Neustart, ob sie selbst fehlerfrei und in einem einwandfreien Zustand ist. Danach setzt die Bootloader-Update-Software eine Startadresse, den Startvektor, so, dass sie nach einem Neustart des Gerätes selbst gestartet wird. Nach dem Start der Bootloader-Update-Software schreibt diese den Bootloader neu und überprüft, ob dieser fehlerfrei und einwandfrei geschrieben wurde. Danach setzt die Bootloader-Update-Software den Startvektor wieder so, dass bei einem erneuten Gerätestart der Bootloader gestartet wird. Wenn sichergestellt ist (zum Beispiel durch Watchdog-Resets), dass der Bootloader funktioniert, kann sich die Bootloader-Update-Software unbrauchbar machen.

## Patentansprüche

1. Beleuchtungstechnik-Busteilnehmer (1-8) mit:
a. einem ersten Speicherbereich in dem ein Bootloader gespeichert ist,
b. einem zweiten Speicherbereich zur Aufnahme einer Update-Software,
c. einem Mittel zum Empfangen von Daten und
d. einem Mittel zum Senden von Daten,
**dadurch gekennzeichnet,**
**dass** der Beleuchtungstechnik-Busteilnehmer (1-8) bei Empfang eines Initialisierungsbefehls in einen Update-Modus versetzt wird,
**dass** der Bootloader eine Update-Identifikation empfängt, und
**dass** der Bootloader anhand der Update-Identifikation, einer Hardware-ID und/oder auf Grund anderer Parameter ermittelt, ob eine empfange Update-Software/empfangene Update-Software-Blöcke für den Beleuchtungstechnik-Busteilnehmer (1-8) bestimmt ist/sind.

2. Beleuchtungstechnik-Busteilnehmer (1-8) nach Anspruch 1, wobei der Bootloader im Update-Modus aktiv ist und eine Update-Software/Update-Software-Blöcke von einer Zentraleinheit empfängt und in den zweiten Speicherbereich schreibt.

3. Beleuchtungstechnik-Busteilnehmer (1-8) nach Anspruch 1 oder 2, wobei der Bootloader prüft, ob die Update-Software fehlerfrei empfangen wurde.

4. Beleuchtungstechnik-Busteilnehmer (1-8) nach einem der vorhergehenden Ansprüche, wobei der Bootloader eine Nachricht an eine Steuersoftware übermittelt, die eine nicht fehlerfreie Übermittlung der Update-Software/Update-Software-Blöcke anzeigt.

5. Computerbasierte Zentraleinheit, die dazu eingerichtet ist,
a. eine Steuersoftware auszuführen,
b. zur Verfügung stehende Beleuchtungstechnik-Busteilnehmer (1-8) zu ermitteln,
c. für die ermittelten Beleuchtungstechnik-Busteilnehmer (1-8) passende Update-Software zu ermitteln,
d. eine Benutzerschnittstelle zur Auswahl von Beleuchtungstechnik-Busteilnehmern (1-8) bereitzustellen,
e. ausgewählte Beleuchtungstechnik-Busteilnehmer (1-8) durch übermitteln eines Initialisierungsbefehls in einen Update-Modus zu versetzen und
f. Update-Software an die ausgewählten Beleuchtungstechnik-Busteilnehmer (1-8) zu übermitteln,
**dadurch gekennzeichnet,**
**dass** der jeweilige der entsprechend ausgewählten Beleuchtungstechnik-Busteilnehmer (1-8) bei Empfang des Initialisierungsbefehls in den Update-Modus versetzt wird,
**dass** ein jeweiliger Bootloader der entsprechend ausgewählten Beleuchtungstechnik-Busteilnehmer (1-8) eine Update-Identifikation empfängt, und
**dass** der jeweilige Bootloader der entsprechend ausgewählten Beleuchtungstechnik-Busteilnehmer (1-8) anhand der Update-Identifikation, einer Hardware-ID und/oder auf Grund anderer Parameter ermittelt, ob eine empfange Update-Software/empfangene Update-Software-Blöcke für den jeweiligen der entsprechend ausgewählten Beleuchtungstechnik-Busteilnehmer (1-8) bestimmt ist/sind.

6. Computerbasierte Zentraleinheit nach Anspruch 5, die weiter dazu eingerichtet ist, Nachrichten über die Übermittlung der Update-Software zu empfangen.

7. Computerbasierte Zentraleinheit nach Anspruch 5 oder 6, die weiter dazu eingerichtet ist, Nachrichten über die Übermittlung der Update-Software zu protokollieren.

8. Computerbasierte Zentraleinheit nach einem der Ansprüche 5 bis 7, wobei die Update-Software in Update-Software-Blöcken übermittelt wird.

9. Computerbasierte Zentraleinheit nach einem der Ansprüche 5-8, die weiter dazu eingerichtet ist, nach erfolgreicher Übermittlung der Update-Software/Update-Software-Blöcke den entsprechenden Beleuchtungstechnik-Busteilnehmer (1-8) in einen Betriebsmodus zu versetzen.

10. Computerbasierte Zentraleinheit nach einem der Ansprüche 5-9, die weiter dazu eingerichtet ist, nicht erfolgreiche übermittelte Update-Software/Update-Software-Blöcke erneut an entsprechende Beleuchtungstechnik-Busteilnehmer (1-8) zu versenden.

11. Computerbasierte Zentraleinheit nach einem der Ansprüche 5-9, wobei die Update-Software zeitgesteuert übermittelt wird.

12. Computerbasierte Zentraleinheit nach einem der Ansprüche 5 bis 11, wobei die computerbasierte Zentraleinheit jeder Beleuchtungstechnik-Busteilnehmerart eine Update-Identifikation zuweist, wobei vorzugsweise die computerbasierte Zentraleinheit für jede Beleuchtungstechnik-Busteilnehmerart eine Update-Software übermittelt.

13. System aus mindestens einem Beleuchtungstechnik-Busteilnehmer (1-8) nach einem der Ansprüche 1 bis 4 und mindestens einer computerbasierten Zentraleinheit nach einem der Ansprüche 5 bis 12.

## Claims

1. A lighting bus device (1-8) comprising:
a. a first memory area in which a bootloader is stored,
b. a second memory area for receiving an update software,
c. means for receiving data, and
d. means for sending data,
**characterized in that** the lighting bus device (1-8) is set into an update mode upon receiving an initialization command,
that the bootloader receives an update identification,
and that the bootloader determines, on the basis of the update identification, a hardware ID and/or other parameters, whether the received update software or update software blocks are intended for the lighting bus device (1-8).

2. The lighting bus device (1-8) according to claim 1, wherein the bootloader is active in the update mode and receives update software or update software blocks from a central unit and writes the received update software or blocks into the second memory area.

3. The lighting bus device (1-8) according to claim 1 or 2, wherein the bootloader checks whether the update software has been received without errors.

4. The lighting bus device (1-8) according to any one of the preceding claims, wherein the bootloader transmits a message to a control software, which indicates that the transmission of the update software or update software blocks was not error-free.

5. A computer-based central unit configured to:
a. execute control software,
b. identify available lighting bus devices (1-8),
c. determine appropriate update software for the identified lighting bus devices (1-8),
d. provide a user interface for selecting lighting bus devices (1-8),
e. set selected lighting bus devices (1-8) into an update mode by sending an initialization command, and
f. transmit update software to the selected lighting bus devices (1-8),
**characterized in that** each selected lighting bus device (1-8) is set into the update mode upon receipt of the initialization command,
that a respective bootloader of each selected lighting bus device (1-8) receives an update identification,
and that the respective bootloader of each selected lighting bus device (1-8) determines, on the basis of the update identification, a hardware ID and/or other parameters, whether the received update software or update software blocks are intended for the respective lighting bus device (1-8).

6. The computer-based central unit according to claim 5, further configured to receive messages concerning the transmission of the update software.

7. The computer-based central unit according to claim 5 or 6, further configured to log messages concerning the transmission of the update software.

8. The computer-based central unit according to any one of claims 5 to 7, wherein the update software is transmitted in update-software blocks.

9. The computer-based central unit according to any one of claims 5 to 8, further configured to, after successful transmission of the update software or update software blocks, set the corresponding lighting bus device (1-8) into an operating mode.

10. The computer-based central unit according to any one of claims 5 to 9, further configured to re-send update software or update software blocks that were not transmitted successfully to the corresponding lighting bus devices (1-8).

11. The computer-based central unit according to any one of claims 5 to 9, wherein the update software is transmitted in a time-controlled manner.

12. The computer-based central unit according to any one of claims 5 to 11, wherein the computer-based central unit assigns an update identification to each lighting bus device type, wherein preferably the computer-based central unit transmits an update software for each lighting bus device type.

13. A system comprising at least one lighting bus device (1-8) according to any one of claims 1 to 4, and at least one computer-based central unit according to any one of claims 5 to 12.

## Revendications

1. Participant de bus d'éclairage (1-8) comprenant :
a. une première zone de mémoire dans laquelle un programme d'amorçage (bootloader) est stocké,
b. une deuxième zone de mémoire pour la réception d'un logiciel de mise à jour,
c. un moyen de réception de données, et
d. un moyen d'envoi de données,
**caractérisé en ce que** le participant de bus d'éclairage (1-8) est placé en mode de mise à jour lors de la réception d'une commande d'initialisation,
**en ce que** le programme d'amorçage reçoit une identification de mise à jour,
et **en ce que** le programme d'amorçage détermine, sur la base de l'identification de mise à jour, d'un identifiant matériel et/ou d'autres paramètres, si le logiciel de mise à jour reçu ou les blocs du logiciel de mise à jour reçus sont destinés audit participant de bus d'éclairage (1-8).

2. Participant de bus d'éclairage (1-8) selon la revendication 1, dans lequel le programme d'amorçage est actif en mode de mise à jour et reçoit un logiciel de mise à jour ou des blocs de logiciel de mise à jour provenant d'une unité centrale, et inscrit ledit logiciel de mise à jour ou blocs reçus dans la deuxième zone de mémoire.

3. Participant de bus d'éclairage (1-8) selon la revendication 1 ou 2, dans lequel le programme d'amorçage vérifie si le logiciel de mise à jour a été reçu sans erreur.

4. Participant de bus d'éclairage (1-8) selon l'une quelconque des revendications précédentes, dans lequel le programme d'amorçage transmet un message à un logiciel de commande, lequel indique qu'une transmission du logiciel de mise à jour ou des blocs du logiciel de mise à jour n'était pas exempte d'erreur.

5. Unité centrale informatisée configurée pour :
a. exécuter un logiciel de commande,
b. identifier des participants de bus d'éclairage (1-8) disponibles,
c. déterminer un logiciel de mise à jour approprié pour les participants de bus d'éclairage (1-8) identifiés,
d. fournir une interface utilisateur pour la sélection de participants de bus d'éclairage (1-8),
e. placer, par l'envoi d'une commande d'initialisation, les participants de bus d'éclairage (1-8) sélectionnés en mode de mise à jour, et
f. transmettre un logiciel de mise à jour aux participants de bus d'éclairage (1-8) sélectionnés,
**caractérisée en ce que** chacun des participants de bus d'éclairage (1-8) sélectionnés est placé en mode de mise à jour lors de la réception de la commande d'initialisation,
**en ce qu'**un programme d'amorçage de chacun des participants de bus d'éclairage (1-8) sélectionnés reçoit une identification de mise à jour,
et **en ce que** le programme d'amorçage de chacun des participants de bus d'éclairage (1-8) sélectionnés détermine, sur la base de l'identification de mise à jour, d'un identifiant matériel et/ou d'autres paramètres, si le logiciel de mise à jour reçu ou les blocs du logiciel de mise à jour reçus sont destinés audit participant de bus d'éclairage (1-8).

6. Unité centrale informatisée selon la revendication 5, qui est en outre configurée pour recevoir des messages relatifs à la transmission du logiciel de mise à jour.

7. Unité centrale informatisée selon la revendication 5 ou 6, qui est en outre configurée pour consigner des messages relatifs à la transmission du logiciel de mise à jour.

8. Unité centrale informatisée selon l'une quelconque des revendications 5 à 7, dans laquelle le logiciel de mise à jour est transmis sous forme de blocs de logiciel de mise à jour.

9. Unité centrale informatisée selon l'une quelconque des revendications 5 à 8, qui est en outre configurée pour placer, après une transmission réussie du logiciel de mise à jour ou des blocs du logiciel de mise à jour, le participant de bus d'éclairage correspondant (1-8) en mode de fonctionnement.

10. Unité centrale informatisée selon l'une quelconque des revendications 5 à 9, qui est en outre configurée pour renvoyer le logiciel de mise à jour ou les blocs de logiciel de mise à jour qui n'ont pas été transmis avec succès aux participants de bus d'éclairage correspondants (1-8).

11. Unité centrale informatisée selon l'une quelconque des revendications 5 à 9, dans laquelle le logiciel de mise à jour est transmis de manière planifiée dans le temps.

12. Unité centrale informatisée selon l'une quelconque des revendications 5 à 11, dans laquelle l'unité centrale informatisée assigne une identification de mise à jour à chaque type de participant de bus d'éclairage, et dans laquelle de préférence l'unité centrale informatisée transmet un logiciel de mise à jour pour chaque type de participant de bus d'éclairage.

13. Système comprenant au moins un participant de bus d'éclairage (1-8) selon l'une quelconque des revendications 1 à 4, et au moins une unité centrale informatisée selon l'une quelconque des revendications 5 à 12.
